# EUROPEAN PATENT SPECIFICATION

(11) **EP 0 645 079 B1**
(45) Date of publication and mention of the grant of the patent: **26.05.1999**
(21) Application number: 94202714.5
(22) Date of filing: 21.09.1994
(51) Int. Cl.: A01J 7/00, A01J 5/08

(54) **A construction for automatically milking animals**
Vorrichtung zum automatischen Melken von Tieren
Dispositif de traite automatique d'animaux

(30) Priority: 23.09.1993 NL 9301643
(43) Date of publication of application: 29.03.1995
(60) Divisional application: 98203804.4
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 207 572
- EP-A- 0 332 235
- EP-A- 0 347 004
- EP-A- 0 513 932
- EP-A- 0 551 958
- WO-A-93/13651
- FR-A- 2 408 300

## Description

The present invention relates to a construction for the automatic milking of animals, such as cows, comprising one or more searching devices with a suction mouthpiece which comprises one or more openings through which air can be sucked in for the determining of the position of the teats and/or for the connecting of the teat cups to the teats, said device being in contact or at short distance to the teats or the udder of the animal when searching for the teats.

Such a construction is known from FR-A-2 408 300.

In this construction the suction mouthpiece is operated by the vacuum applied in the milk line of the teat cups. Furthermore the position of the teat cups is detected by means of a camera. Furthermore it may be advantageous to use less electronics under certain conditions, especially for detecting the position of the teats.

Further it is desirable to clean the udder and teats of the animal, and to connect the teat cups to the teats in a proper way.

It is an objective of the invention to provide a construction of the above type, in which the search for the teats of an animal takes place in a simple way.

According to the invention, this is achieved in that the construction comprises one or more touching or searching devices for the determining of the position of the teats and/or for the connecting of the teat cups to the teats, said device being in contact or at short distance to the teats or the udder of the animal when searching for the teats. According to a further feature of the invention, the searching device can operate pneumatically. According to the invention, the searching device is for this purpose connected to an air hose, in which a vacuum can be developed, so that air can be sucked into the searching device. When the searching device is in the vicinity of a teat, according to the invention, the teat is drawn into the direction of the searching device by means of a suction mouthpiece which belongs to the searching device and is provided with one or more openings, through which air can be sucked in.

In a preferred embodiment of the invention, the suction mouthpiece is circular or semi-circular. To determine whether the searching device has found a teat, according to the invention, the searching device is provided with one or more sensors, which produce a signal when the air flow changes in the suction mouthpiece and/or air line.

To enable the searching device to be moved underneath the udder, according to the invention, the searching device is suitable for cleaning a part of the animal.

In a first embodiment of the invention, the searching device is part of a teat cup. In a second embodiment of the invention, the searching device comprises a circular or semi-circular air detection ring, which is connected to a robot arm and which is moved underneath the udder during the search for teats. When a teat is sucked firmly against the air detection ring, using the known detection ring position as a point of reference, a teat cup is positioned under the ring and is subsequently raised to couple the teat cup to the teat.

In the first exemplary embodiment of the invention, the suction mouthpiece is constituted by the upper part of the teat cup. To prevent the teat cups and teats from being injured, the outer edge of the suction mouthpiece according to the invention is made of a flexible material.

To prevent that in the first exemplary embodiment the teat cups interfere with each other and that in the second exemplary embodiment a complicated positioning procedure has to be followed, the suction mouthpiece according to the invention has a diameter of the same order as the teat cup diameter.

According to a further feature of the invention, the searching device is, through an air outlet line, connected to a continuously sucking pump whose suction force is adjustable. In the first exemplary embodiment, the air outlet line is according to the invention disposed near the upper end of a teat cup. In the two exemplary embodiments, the suction system according to the invention comprises means, with the aid of which the air line is closed during milking or in the condition of rest.

To prevent a teat from becoming injured when it is against the suction mouthpiece, the suction mouthpiece is according to the invention provided with a certain profile allowing air to be drawn in when a teat is against the suction mouthpiece. In a preferred embodiment according to the invention, the profile comprises ridges extending in the longitudinal direction.

To prevent dirt from entering the teat cups, the teat cups are according to the invention provided with closing means, which close the milk hose and/or pulsation hose when air is drawn in through the suction mouthpiece and the air hose.

To determine whether a teat is correctly positioned in the teat cup, the construction according to the invention comprises one or more sensors, by means of which data concerning the position of a teat in the teat cup can be obtained and also the suction force in the air hose can be automatically adjusted in accordance with said data.

Apart from the fact that the teats can be found and the teat cups can be connected by means of the construction according to the invention, the udder and/or the teats can be cleaned by means of the construction. According to the invention, for this purpose the construction comprises means, through which the suction mouthpieces are automatically movable such that the animal's udder and/or teats are automatically cleanable by means of the suction system and the suction mouthpieces.

According to another aspect of the invention, the teat cups are attached to a holder of the milking robot by means of a flexible connection, such as a short cable, all this being such that during milking the teat cups are at a certain distance from, and freely movable with respect to the holder.

According to still another aspect of the invention, the coupling of the teat cups is mainly based on moving the openings of the teat cups past the animal's udder, while a vacuum prevails in these openings.

The invention will be further explained with reference to the accompanying drawings, in which:
Figure 1 is the plan view of a milking parlour equipped with a milking robot, including the outline of a dairy animal, in the present case a cow;
Figure 2 is a view of the milking robot according to arrow II-II in Figure 1;
Figure 3 is a plan view of an enlarged portion of the robot arm, on which teat cups are disposed;
Figure 4 is a plan view in accordance with Figure 3, with a schematic representation of the position of the teat cups in relation to, and their attachment to, the robot arm during the milking of the animal;
Figure 5 is a longitudinal section of a first embodiment of a searching device comprising a teat cup and a suction mouthpiece arranged therein;
Figure 6 shows a second embodiment of a searching device;
Figure 7 shows a third embodiment of a searching device, and
Figure 8 shows a side view of the searching device in accordance with Figure 6, where a teat cup is at the point of being connected to a teat.

Corresponding parts in the drawings are indicated by the same reference numbers. The invention is by no means limited to the embodiments depicted and described here; they are only to illustrate the inventive idea.

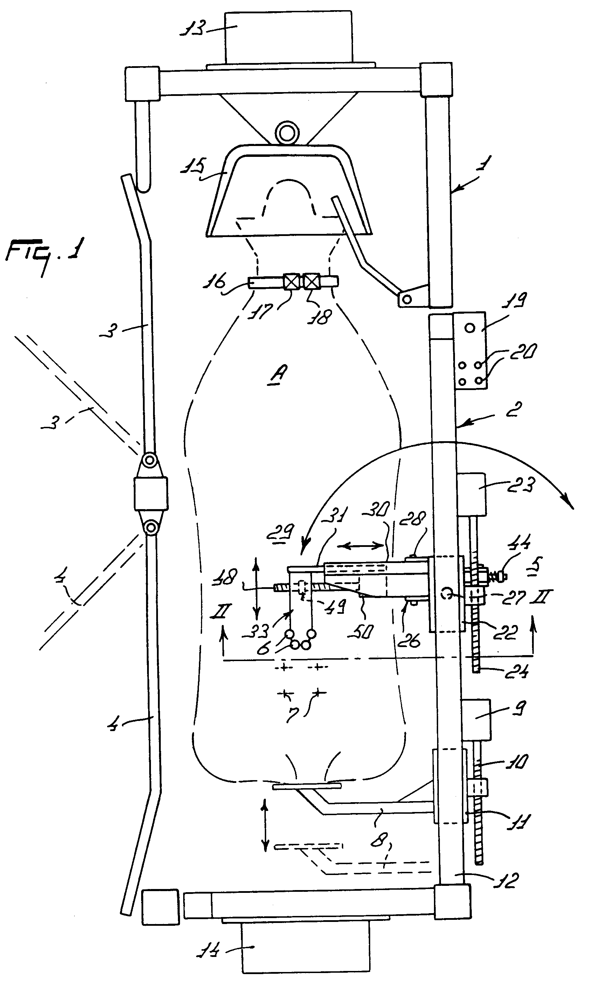

Figure 1 shows a milking parlour in which there is a dairy animal, in the present case a cow A, within a fencing comprising the front fencing part 1, the rear fencing part 2, and the fencing doors 3 and 4. The milking parlour is provided with a milking robot 5, by means of which teat cups 6 can be connected to the schematically represented teats 7 of the udder of the cow A. For a coarse determination of a necessary starting point, the milking robot operates in conjunction with a contact device 8. The contact device 8 is movable along a horizontal support 12 which is part of the rear fencing part 2, by means of a stepping motor 9, a lead screw 10 attached to it, and a straight guide 11. Such a support 12 can also be disposed on or next to an existing fencing. The milking parlour comprises a computer system 13 which controls an automatic feeder. The computer system 13 of the automatic feeder operates independently of a computer system 14 for the milking robot and, every time when it signalizes, recognizes and also accepts an animal A in the milking parlour 1, it dispenses a quantity of feed adjusted to the relevant animal into a feed trough 15 mounted on the front fencing part 1.

The dairy animal is provided with a collar 16 bearing two separate indication and information devices 17 and 18. Each of these devices is at the disposal of one of the two computer systems 13, 14 as to secure the independent operation of the two computers. Furthermore, the milking parlour is provided with an indication device 19 for measuring the milk flow originating from a teat 7 of the udder of the animal A. For each teat, there is provided a light-emitting device 20 which lights up when it has been established, through a sensor in a teat cup 6 or in the milk line 21 of a certain teat cup 6, that the milk flow has dropped below a given value to be set. The indication device 19 can also be provided with two light-emitting devices for the milk flow from each teat 7, the one of which radiating green light during milking and the other radiating red light when the milk flow from a corresponding teat has fallen below the set threshold value. In still another design, the indication device is of an acoustic type, such as a buzzer.

The milking robot 5 is disposed movably in the longitudinal direction of the milking parlour, i.e. in the direction of the imaginary line between head and tail of the dairy animal A in the milking parlour, and is mounted on a horizontal support 12 which is part of the rear fencing part 2. For this purpose, the milking robot 5 comprises a straight guide 22, a stepping motor 23 driving a lead screw 24 which acts on the straight guide 22. Here, the stepping motor 23 is controlled by the computer 14 of the milking robot.

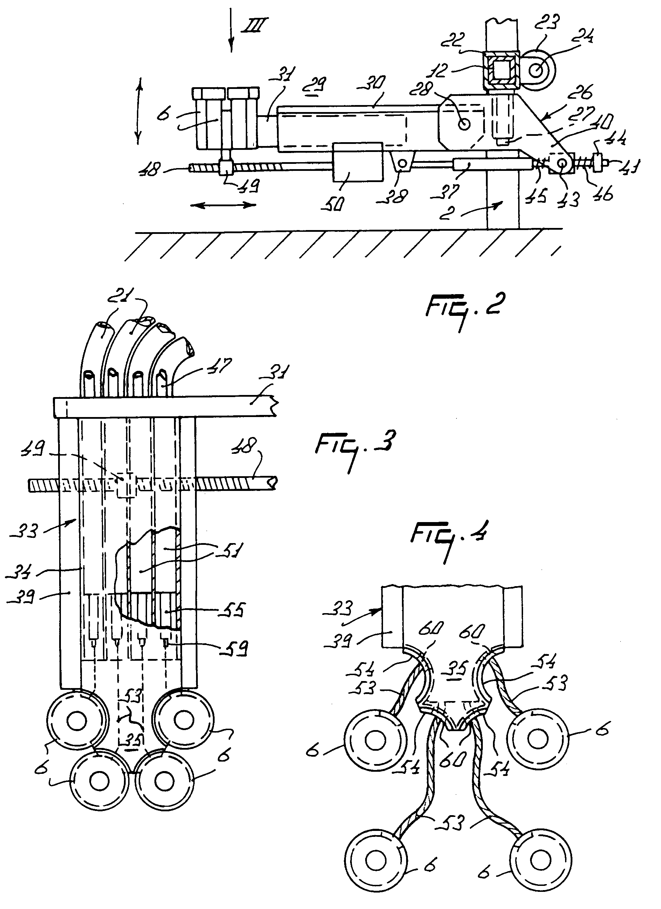

Figure 2 shows, at the lower end of the straight guide 22, a holder 26 hinge-mounted on a shaft 27 vertically attached to the straight guide 22. On the holder 26, there is provided, hinge-mounted on a horizontal shaft 28, a telescopic arm 29 comprising a fixed part 30 and a part 31 slidable therein. A carrier member 33 for the teat cups 6 is disposed square to the end of the slidable arm part 31. The carrier member 33 comprises a housing part 34 and a seating part 35, which parts are integrated in the present design. The slidable arm part and the teat cups on it are movable with respect to the fixed arm part 30 by means of a lead screw 48 which engages a threaded member 49 at the bottom of the carrier member 33. The lead screw 48 is driven by a stepping motor 50 which is controlled by the computer system 14 of the milking robot 5.

With respect to the holder 26, the arm 29 is supported and, when energized, capable of being swivelled by means of an adjusting cylinder 37. Near the centre of the fixed arm part 30, the adjusting cylinder piston rod acts on a horizontal shaft 38 mounted between two lugs on the fixed arm part. The adjusting cylinder 37 is in line with the arm 29 and it extends, underneath the end of the vertical shaft 27, to a holder arm 40 of the holder 26. The cylinder part of the adjusting cylinder 37 is supported, with respect to the holder arm 40, through a rod 41 mounted in line with the cylinder and fed through a hole in a block 42 hinge-mounted to the holder arm 40 through horizontal pivots 43. An adjusting nut 44 is fitted on the threaded end of the sliding rod 41. A compression spring 45 is fitted between the cylinder part of the adjusting cylinder 37 and the block 42, and a second compression spring 46 is fitted between the adjusting nut 44 and the block 42.

In the housing part 34 of the carrier member 33 there are provided, disposed at right angles to the arm 29, four fixed cylinders 51 which are capable of being operated pneumatically or hydraulically through supply hoses 47 (Figure 3). Attached to the piston rod 55 of each of the cylinders 51 is a pulling device 53 which is connected with a teat cup 6. In a condition of rest, the piston rod 55 of a cylinder 51 is withdrawn so far that a teat cup 6 is drawn against seating face 54 provided on the seating part 35 of the carrier member 33.

Figure 4 shows the arrangement of the teat cups 6 during milking. In this drawing, the pulling device 53 is not tightened, allowing the milked animal A to move independently of the robot arm 30. A seating face 54 has a curvature which at least to a certain extent corresponds with the circumferential curvature of a teat cup 6. The seating faces 54 are provided on the carrier member 33, which is in the shape of an approximately square tube 34. The pulling device 53 is preferably placed between upright walls of the tube, so that a stable contact of cup 6 with seating part 35 is always obtained when it is pulled. In the present design, the seating face 54 closing the tube 34 is a wall 58, in which one or a plurality of openings 60 for the pulling device 53 are provided. The openings are cone-shaped, enabling the pulling device 53 at different angles to be drawn smoothly through the opening 60. A pulling device 53 is connected with piston rod 55 through an intermediate member 59. The intermediate member can be in the shape of an isosceles triangle, while, near the top angle of said triangular shape, the intermediate member 59 is hinged to the piston rod 55. The pulling device 53 comprises two cables or cords of a suitable flexible material, which cables are fastened on one end on a side, i.e. on an upright wall of a teat cup 6. The other end can be disposed on the intermediate member 59.

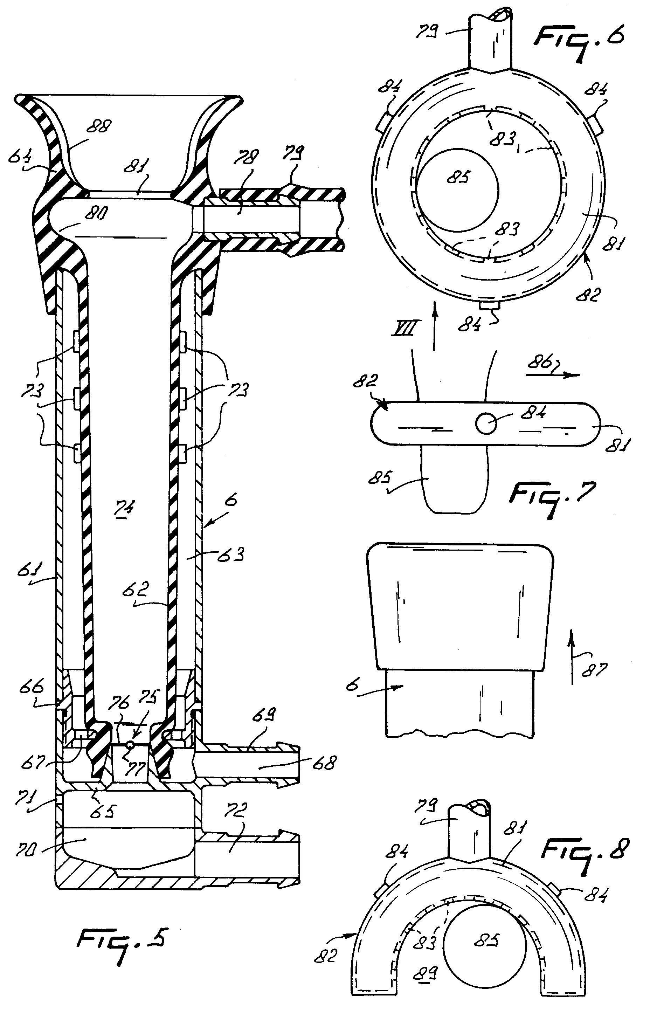

Figure 5 depicts a longitudinal section of a teat cup 6; the latter is in the usual manner composed of a fixed house 61, e.g. made of a metal, accommodating an inner wall 62 made of a flexible material, e.g. rubber, and a rubber cap 64 closing, on the upper side, the interspace 63 between the sleeve 61 and the inner wall 62. On the lower side, the interspace between the sleeve 61 and the inner wall 62 is closed by a sealing ring 65, while above this, between the sleeve 61 and the inner wall 62, there is provided a ring 66 having an opening 67. Between the sealing ring 65 and the ring 66 is a space to which, through an opening 68 and a line 69, a pulsating vacuum is applied by a pulsation system, which gives rise to a pulsating vacuum in the space between the sleeve 61 and the inner wall 62, which vacuum, when the teat cup has been connected in the appropriate way, causes the inner wall 62 to enclose the teat tightly, respectively to release it by moving outwards, resulting in the rhythmic motion around the teat which is required for milking. As a buffer for the milk to be collected and to minimize fluctuations in the vacuum under the teat, in the lower part of the teat cup 6 there is present a buffer space 70 which is provided with a relatively narrow air suction opening 71 on behalf of the milk transport. The line 72 serving for milk removal to a milk meter is connected to this buffer space. In the interspace 63 there are disposed several sensors 73, arranged in the longitudinal direction of the sleeve 61 and placed on the inner wall 62, to determine whether, and, if so, how far a teat has penetrated into the space 74 of the teat cup 6. Between the space 74 and the buffer space 77, near the sealing ring 65 there are provided closing means 75, with the aid of which it is possible to isolate the buffer space 77 from the space 74. The closing means 75 comprise a valve 76, which is pivotable about a shaft 77.

Fitted in the rubber cap 64 near the upper end of the sleeve 61 is a nipple 78, which opens into the space 74 and is connected to an air line 79. The air line 79 is connected with a suction system (not shown) including a continuously sucking pump whose suction power is controllable. To be able to shut off the air line 79, there are provided means (not shown) for closing the air line 79. In line with the nipple 78, a concentric recess 80 is provided in the rubber cap 64. In combination with the cup-shaped upper portion of the rubber cap 64, the recess 80 constitutes a suction mouthpiece 81, through which air can be drawn in. If a relatively high vacuum is applied to the air line 79, the teat cup 6 functions as a mouthpiece of a vacuum cleaner, as it were. When the teat cup 6 is moved underneath the udder, the teat cup 6 can function as a searching device for locating the teats, and where a teat is in the vicinity of the suction mouthpiece 81, the relevant teat is drawn into the teat cup 6. During the search for a teat with the teat cup 6, the buffer space 70 is shut off from the space 74 by means of valve 76, thus preventing dirt or other impurities from entering the buffer space 70 and/or the lines 69 and 72. As soon as a teat is sucked into the space 74, this is detected by sensors 73. After this, the suction force in the air line 79 is automatically reduced, valve 76 is opened and a vacuum is applied to the buffer space 70 and the space 74. This will cause the teat to be drawn in further into the space 74, whereupon a varying vacuum can be applied to the intermediate space 63 through the pulsation line 69 and milking can start.

Figures 6 to 8 show two other exemplary embodiments of search devices, by means of which the teats of an animal to be milked can be found. In Figure 6 and in Figure 8, the search device 82 is formed by a circular mouthpiece 81 made of a tube and, in the inner wall, provided with openings 83, through which air can be drawn in. An air line 79, similar to the air line 79 depicted in Figure 5, is connected to the circular suction mouthpiece 81 through its outer wall. Furthermore, on the outside of the suction mouthpiece 81 there are provided several air flow sensors 84, by means of which it is possible to determine whether the air flow in the suction mouthpiece 81 changes. In the event that a teat 85, as shown in Figure 6, is drawn against the inner wall of the suction mouthpiece 81, this results in a change in the air stream in the tube, which is immediately recorded by the air flow sensors 84. To prevent the teat 85 from being drawn too tight against the suction mouthpiece 81, the suction mouthpiece 81, as represented in Figure 5, may be provided with ribs 88, along which air can be drawn in, even when a teat is against the suction mouthpiece 81. To be able to find the teats with the suction mouthpiece 81, the suction mouthpiece 81 according to Figures 6 to 8 is connected to a robot arm (not shown), by means of which the suction mouthpiece 81 can be moved underneath the udder of an animal to be milked. When the suction mouthpiece 81 has drawn a teat against the inner wall, the suction mouthpiece 81 functions as a point of reference for positioning a teat cup which should be connected to the relevant teat. As indicated in Figure 7, for this purpose the teat cup is put under the suction mouthpiece 81 through a robot arm (not shown), after which, at the same time, the vacuum in the air line 79 is interrupted and the suction mouthpiece 81 is moved in the direction of arrow 86, while the teat cup is moved in the direction of arrow 87. This will cause the teat 85 to whip across the suction mouthpiece 81 and then to be drawn immediately into the opening of the teat cup being lifted. It should be noted that in the exemplary embodiments reflected by Figures 6 to 8, even though the teat cups are moved by means of a robot arm, a standard type of teat cup can be used.

Apart from the fact that it is practicable to position a teat cup under a relevant teat and to connect it on the basis of the suction mouthpiece 81 position, it will be obvious that it is also practicable to subject the relevant teat to any other treatment, such as teat cleaning by means of brushes (not shown), or teat disinfection by means of a spray device.

The search device 82 in Figure 7 is formed by a semi-circular suction mouthpiece 81 which in general operates in the same manner as the search device represented in Figure 6 and in Figure 8. As regards the suction mouthpiece 81 according to Figure 7, the teat 85 does not need to whip across the tubular body 81 for making contact by suction or for uncoupling, because the teat 85 is allowed to leave the suction mouthpiece 81 via the recess 80 between the two legs of the semi-circular suction mouthpiece 81. An advantage of the exemplary embodiment shown in Figure 7 is that it is possible to keep the teat 85 drawn against the suction mouthpiece when the teat 85 has already partly or fully disappeared into the teat cup moving upwards.

It will be obvious that the circular suction mouthpiece 81 as represented in Figure 6 can also be integrated with the teat cup 6 as represented in Figure 5. Here, the circular suction mouthpiece 81 may be disposed in the recess 80.

To realize a simple and efficient coupling of the teat 85 to the teat cup moving upwards, the suction mouthpiece 81 in Figures 6 to 8 has a diameter of the same order as that of the relevant teat cup.

Apart from the fact that with the search device 82 it is Practicable to find the teats of an animal to be milked and to connect the teat cups thereafter, with the search device 82 it is also practicable to clean the teats and/or udder of an animal to be milked. When a cow has entered the milking parlour, the suction mouthpiece(s) is (are) put under and against the animal's udder and, as it were like a vacuum cleaner (vacuum cleaners), is (are) moved along the udder by means of one (or a plurality of) robot(s). To prevent the milk line 72 and the pulsation line 69 from becoming contaminated, the valves 76 are operated in the case of the exemplary embodiment as shown in Figure 5. In a preferred embodiment, only one of four suction mouthpieces is used during cleaning. In cleaning the udder, the suction mouthpiece 81 is automatically moving to and fro, while, in the event that a suction mouthpiece 81 comes under a teat of the animal, the relevant teat is automatically sucked into the relevant teat cup. Subsequently, a vacuum is maintained in the air line 79 for a few seconds, if necessary, then the pressure is removed and valve 75 is opened and a vacuum is applied to the space 74 through the milk line 72. Since the teat cup is connected to the robot arm 30 through the flexible pulling device 53, the teat cup is capable of moving freely after coupling. By this method, the teat cup is coupled to the teat in a manner agreeable to the animal. In the meantime, a next teat cup has been engaged and the udder and teats are further cleaned with the suction mouthpiece 81 until this teat cup is also sucked onto a teat. This procedure repeats itself until all teats have been cleaned and coupled. If sucking a teat into a teat cup is not fast enough and not in the appropriate way, the robot arm is automatically set into vibration, if required. It is also possible to augment the suction force in the air line 79 automatically at the same time.

The invention is not limited to what has been described hereinbefore, but it also covers all what is shown in the drawings.

## Claims

1. A construction for the automatic milking of animals, such as cows, comprising one or more searching devices (6; 82) with a suction mouthpiece (81) which comprises one or more openings through which air can be sucked in for the determining of the position of the teats and/or for the connecting of the teat cups (6) to the teats, said device (6; 82) being in contact or at short distance to the teats or the udder of the animal when searching for the teats, characterized in that the suction mouthpiece (81) is provided with a separate air line (79) by means of which it is able to produce an underpressure in the mouthpiece (81) apart from the underpressure in the teat cups (6) which is produced by a milk line (72) of the teat cup (6).

2. A construction according to claim 1, characterized in that the searching device (6; 82) can operate pneumatically.

3. A construction according to claim 1 or 2, characterized in that an air hose (79) is connected to the searching device (6; 82), in which a vacuum can be created, so that air can be drawn into the searching device (6; 82).

4. A construction according to any one of the preceding claims, characterized in that the suction mouthpiece (81) is circular or semi-circular.

5. A construction according to any one of the preceding claims, characterized in that the searching device (83) is suitable for cleaning a part of the animal.

6. A construction according to any one of the preceding claims, characterized in that the searching device (6; 82) is provided with one or more sensors (84), which produce a signal when the air flow changes in the suction mouthpiece (81) and/or the air hose (79).

7. A construction according to any one of the preceding claims, characterized in that the searching device (6; 82) is part of a teat cup (6).

8. A construction according to any one of the preceding claims, characterized in that the connecting of the teat cups (6) to the teats takes place by means of a suction system provided with one or more suction mouthpieces (81).

9. A construction according to any one of the preceding claims, characterized in that a teat cup (6) is provided with a suction mouth (81), while there is further provided a principally continuously sucking pump for drawing-in air through this suction mouth.

10. A construction according to any one of the preceding claims, characterized in that the suction mouthpiece (81) is constituted by the upper part of the teat cups (6).

11. A construction according to any one of the preceding claims, characterized in that the outer edge of the suction mouthpiece (81) is made of a flexible material.

12. A construction according to any one of the preceding claims, characterized in that the suction mouthpiece (81) is made of rubber or plastic.

13. A construction according to any one of the preceding claims, characterized in that the suction mouthpiece (81) has a diameter of the same order as the teat cup diameter.

14. A construction according to any one of the preceding claims, characterized in that it comprises a continuously sucking pump for drawing-in air through the suction mouthpiece (81).

15. A construction according to any one of the preceding claims, characterized in that the searching device (6; 82) is connected to a continuously sucking pump through an air outlet line (79).

16. A construction according to claim 15, characterized in that the air outlet line (79) is provided near the upper side of a teat cup (6).

17. A construction according to any one of the preceding claims, characterized in that the suction system comprises means, with the aid of which the air line (79)is closed during milking or in the condition of rest.

18. A construction according to any one of the preceding claims, characterized in that the suction force in the air line (79) is adjustable.

19. A construction according to any one of the preceding claims, characterized in that it comprises one or more sensors (73), by means of which data concerning the position of a teat in the teat cup (6) can be obtained, while also the suction force in the air line (79) is automatically adjusted in accordance with said data.

20. A construction according to any one of the preceding claims, characterized in that the suction mouthpiece (81) is provided with a certain profile allowing air to be drawn in when a teat is against the suction mouthpiece (81).

21. A construction according to claim 18, characterized in that the profile comprises ridges (88) extending in the longitudinal direction of a teat cup.

22. A construction according to any one of the preceding claims, characterized in that the teat cups (6) are provided with closing means which close the milk line when air is drawn in through the suction mouthpiece (81) and the air line (79).

23. A construction according to any one of the preceding claims, characterized in that it comprises means, by means of which the suction mouthpieces (81) are automatically movable such that the animal's udder and/or teats are automatically cleanable by means of the suction system and suction mouthpieces (81).

24. A construction according to any one of the preceding claims, characterized in that coupling the teat cups (6) to the animal's teats is principally based on moving the openings (80) of the teat cups (6) along the animal's udder, with a vacuum prevailing in these openings (80).

## Patentansprüche

1. Vorrichtung zum automatischen Melken von Tieren, wie z. B. Kühen, mit einer oder mehreren Suchvorrichtungen (6; 82) mit einem Saugmundstück (81), das eine oder mehrere Öffnungen aufweist, durch welche zur Ermittlung der Position der Zitzen und/oder zum Anschließen der Zitzenbecher (6) an die Zitzen Luft einzusaugen ist, wobei die Vorrichtung (6; 82) bei der Suche nach den Zitzen in Kontakt mit den Zitzen oder dem Euter des Tieres steht oder geringen Abstand zu diesen hat, dadurch gekennzeichnet, daß das Saugmundstück (81) eine getrennte Luftleitung (79) aufweist, mittels der getrennt von dem Unterdruck in den Zitzenbechern (6), der durch eine Milchleitung (72) des Zitzenbechers (6) erzeugt wird, ein Unterdruck in dem Mundstück (81) zu erzeugen ist.

2. Vorrichtung nach Anspruch 1,
dadurch gekennzeichnet, daß die Suchvorrichtung (6; 82) pneumatisch zu betätigen ist.

3. Vorrichtung nach Anspruch 1 oder 2,
dadurch gekennzeichnet, daß ein Luftschlauch (79) an die Suchvorrichtung (6; 82) angeschlossen ist, in der ein Vakuum zu erzeugen ist, so daß in die Suchvorrichtung (6; 82) Luft einzusaugen ist.

4. Vorrichtung nach einem der vorhergehenden Ansprüche,
dadurch gekennzeichnet, daß das Saugmundstück (81) kreisförmig oder halbkreisförmig ist.

5. Vorrichtung nach einem der vorhergehenden Ansprüche,
dadurch gekennzeichnet, daß die Suchvorrichtung (82) geeignet ist, einen Teil des Tieres zu reinigen.

6. Vorrichtung nach einem der vorhergehenden Ansprüche,
dadurch gekennzeichnet, daß die Suchvorrichtung (6; 82) einen oder mehrere Sensoren (84) aufweist, die ein Signal erzeugen, wenn sich der Luftstrom im Saugmundstück (81) und/oder im Luftschlauch (79) verändert.

7. Vorrichtung nach einem der vorhergehenden Ansprüche,
dadurch gekennzeichnet, daß die Suchvorrichtung (6; 82) Teil eines Zitzenbechers (6) ist.

8. Vorrichtung nach einem der vorhergehenden Ansprüche,
dadurch gekennzeichnet, daß der Anschluß der Zitzenbecher (6) an die Zitzen mittels einer Saugvorrichtung erfolgt, die ein oder mehrere Saugmundstücke (81) aufweist.

9. Vorrichtung nach einem der vorhergehenden Ansprüche,
dadurch gekennzeichnet, daß ein Zitzenbecher (6) ein Saugmundstück (81) aufweist, wobei ferner eine im wesentlichen kontinuierlich arbeitende Saugpumpe zum Einsaugen von Luft durch dieses Saugmundstück vorgesehen ist.

10. Vorrichtung nach einem der vorhergehenden Ansprüche,
dadurch gekennzeichnet, daß das Saugmundstück (81) durch den oberen Teil der Zitzenbecher (6) gebildet ist.

11. Vorrichtung nach einem der vorhergehenden Ansprüche,
dadurch gekennzeichnet, daß der äußere Rand des Saugmundstückes (81) aus einem flexiblen Material hergestellt ist.

12. Vorrichtung nach einem der vorhergehenden Ansprüche,
dadurch gekennzeichnet, daß das Saugmundstück (81) aus Gummi oder Kunststoff hergestellt ist.

13. Vorrichtung nach einem der vorhergehenden Ansprüche,
dadurch gekennzeichnet, daß das Saugmundstück (81) einen Durchmesser derselben Größenordnung wie der Zitzenbecherdurchmesser hat.

14. Vorrichtung nach einem der vorhergehenden Ansprüche,
dadurch gekennzeichnet, daß die Vorrichtung eine kontinuierlich arbeitende Saugpumpe zum Einsaugen von Luft durch das Saugmundstück (81) aufweist.

15. Vorrichtung nach einem der vorhergehenden Ansprüche,
dadurch gekennzeichnet, daß die Suchvorrichtung (6; 82) über eine Luftaustrittsleitung (79) mit einer kontinuierlich arbeitenden Saugpumpe verbunden ist.

16. Vorrichtung nach Anspruch 15,
dadurch gekennzeichnet, daß die Luftaustrittsleitung (79) nahe der Oberseite eines Zitzenbechers (6) angeordnet ist.

17. Vorrichtung nach einem der vorhergehenden Ansprüche,
dadurch gekennzeichnet, daß die Saugvorrichtung eine Einrichtung aufweist, mittels der die Luftleitung (79) während des Melkens oder in der Ruhelage geschlossen wird.

18. Vorrichtung nach einem der vorhergehenden Ansprüche,
dadurch gekennzeichnet, daß die Saugkraft in der Luftleitung (79) einstellbar ist.

19. Vorrichtung nach einem der vorhergehenden Ansprüche,
dadurch gekennzeichnet, daß die Vorrichtung einen oder mehrere Sensoren (73) aufweist, mittels derer Daten bezüglich der Position einer Zitze im Zitzenbecher (6) zu erzielen sind, wobei gemäß diesen Daten auch die Saugkraft in der Luftleitung (79) automatisch eingestellt wird.

20. Vorrichtung nach einem der vorhergehenden Ansprüche,
dadurch gekennzeichnet, daß das Saugmundstück (81) ein bestimmtes Profil aufweist, das das Einsaugen von Luft ermöglicht, wenn eine Zitze an dem Saugmundstück (81) anliegt.

21. Vorrichtung nach Anspruch 18,
dadurch gekennzeichnet, daß das Profil Rippen (88) aufweist, die sich in Längsrichtung eines Zitzenbechers erstrecken.

22. Vorrichtung nach einem der vorhergehenden Ansprüche,
dadurch gekennzeichnet, daß die Zitzenbecher (6) eine Schließvorrichtung aufweisen, die die Milchleitung verschließt, wenn durch das Saugmundstück (81) und die Luftleitung (79) Luft eingesaugt wird.

23. Vorrichtung nach einem der vorhergehenden Ansprüche,
dadurch gekennzeichnet, daß die Vorrichtung eine Einrichtung aufweist, mittels der die Saugmundstücke (81) automatisch bewegbar sind, derart, daß das Euter und/oder die Zitzen des Tieres mittels der Saugvorrichtung und der Saugmundstücke (81) automatisch zu reinigen sind.

24. Vorrichtung nach einem der vorhergehenden Ansprüche,
dadurch gekennzeichnet, daß der Anschluß der Zitzenbecher (6) an die Zitzen des Tieres im wesentlichen darauf beruht, daß die Öffnungen (80) der Zitzenbecher (6) an dem Euter des Tieres entlangbewegt werden, wobei in diesen Öffnungen (80) ein Vakuum herrscht.

## Revendications

1. Dispositif de traite automatique d'animaux, tels que des vaches, comprenant un ou plusieurs dispositifs chercheurs (6; 82) avec une embouchure aspiratrice (81) qui comprend une ou plusieurs ouvertures par lesquelles de l'air peut être aspiré pour déterminer la position des trayons et/ou pour relier les godets de trayons (6) aux trayons, ledit dispositif (6; 82) étant en contact avec les trayons ou le pis de l'animal ou à courte distance de ceux-ci pendant la recherche des trayons,
**caractérisé** en ce que l'embouchure aspiratrice(81) est munied'un tuyau à air (79) séparé au moyen duquel elle est apte à produire une dépression dans l'embouchure (81) séparément de la dépression dans les godets de trayons (6) qui est produite par un tuyau à lait (72) du godet de trayon (6).

2. Dispositif selon la revendication 1, caractérisé en ce que le dispositif chercheur (6; 82) peut fonctionner pneumatiquement.

3. Dispositif selon la revendication 1 ou 2, caractérisé en ce qu'un tuyau à air (79) est relié au dispositif chercheur (6; 82), dans lequel un vide peut être créé, de telle sorte que de l'air puisse être aspiré dans le dispositif chercheur (6; 82).

4. Dispositif selon l'une quelconque des revendications précédentes, caractérisé en ce que l'embouchure aspiratrice (81) est circulaire ou semi-circulaire.

5. Dispositif selon l'une quelconque des revendications précédentes, caractérisé en ce que le dispositif chercheur (82) est approprié pour nettoyer une partie de l'animal.

6. Dispositif selon l'une quelconque des revendications précédentes, caractérisé en ce que le dispositif chercheur (6; 82) est muni d'un ou plusieurs capteurs (84) qui produisent un signal quand le débit d'air change dans l'embouchure aspiratrice (81) et/ou dans le tuyau à air (79).

7. Dispositif selon l'une quelconque des revendications précédentes, caractérisé en ce que le dispositif chercheur (6; 82) fait partie d'un godet de trayon (6).

8. Dispositif selon l'une quelconque des revendications précédentes, caractérisé en ce que le branchement des godets de trayons (6) avec les trayons a lieu au moyen d'un système d'aspiration muni d'une ou plusieurs embouchures aspiratrices (81).

9. Dispositif selon l'une quelconque des revendications précédentes, caractérisé en ce qu'un godet de trayon (6) est muni d'une bouche d'aspiration (81), tandis qu'il est prévu en outre une pompe qui aspire en principe continuellement pour aspirer de l'air à travers cette bouche d'aspiration.

10. Dispositif selon l'une quelconque des revendications précédentes, caractérisé en ce que l'embouchure aspiratrice (81) est constituée par la partie supérieure des godets de trayons (6).

11. Dispositif selon l'une quelconque des revendications précédentes, caractérisé en ce que le bord extérieur de l'embouchure aspiratrice (81) est fait d'un matériau flexible.

12. Dispositif selon l'une quelconque des revendications précédentes, caractérisé en ce que l'embouchure aspiratrice (81) est en caoutchouc ou en plastique.

13. Dispositif selon l'une quelconque des revendicatons précédentes, caractérisé en ce que l'embouchure aspiratrice (81) a un diamètre du même ordre de grandeur que le diamètre du godet de trayon.

14. Dispositif selon l'une quelconque des revendications précédentes, caractérisé en ce qu'il comprend une pompe qui aspire continuellement pour aspirer de l'air à travers l'embouchure aspiratrice (81).

15. Dispositif selon l'une quelconque des revendications précédentes, caractérisé en ce que le dispositif chercheur (6; 82) est relié à une pompe qui aspire continuellement par un tuyau de sortie de l'air (79).

16. Dispositif selon la revendication 15, caractérisé en ce que le tuyau de sortie de l'air (79) est prévu près du côté supérieur d'un godet de trayon (6).

17. Dispositif selon l'une quelconque des revendications précédentes, caractérisé en ce que le système d'aspiration comprend des moyens à l'aide desquels le tuyau à air (79) est fermé pendant la traite ou dans l'état de repos.

18. Dispositif selon l'une quelconque des revendications précédents, caractérisé en ce que la force d'aspiration dans le tuyau à air (79) est réglable.

19. Dispositif selon l'une quelconque des revendications précédentes, caractérisé en ce qu'il comprend un ou plusieurs capteurs (73) au moyen desquels des données concernant la position d'un trayon dans le godet de trayon (6) peuvent être obtenues, tandis aussi que la force d'aspiration dans le tuyau à air (79) est réglée automatiquement en fonction desdites données.

20. Dispositif selon l'une quelconque des revendications précédentes, caractérisé en ce que l'embouchure aspiratrice (81) est munie d'un certain profil permettant que de l'air soit aspiré quand un trayon est contre l'embouchure aspiratrice (81).

21. Dispositif selon la revendication 18, caractérisé en ce que le profil comprend des nervures (88) s'étendant dans le sens longitudinal d'un godet de trayon.

22. Dispositif selon l'une quelconque des revendications précédentes, caractérisé en ce que les godets de trayons (6) sont munis de moyens de fermeture qui ferment le tuyau à lait quand de l'air est aspiré par l'embouchure aspiratrice (81) et par le tuyau à air (79).

23. Dispositif selon l'une quelconque des revendications précédentes, caractérisé en ce qu'il comprend des moyens au moyen desquels les embouchures aspiratrices (81) sont mobiles automatiquement de telle sorte que le pis et/ou les trayons de l'animal peuvent être nettoyés automatiquement au moyen du système d'aspiration et des embouchures aspiratrices.

24. Dispositif selon l'une quelconque des revendications précédentes, caractérisé en ce que le couplage des godets de trayons (6) aux trayons de l'animal repose en principe sur la mise en mouvement des ouvertures (80) des godets de trayons (6) le long du pis de l'animal, avec un vide règnant dans ces ouvertures (80).
